# EUROPEAN PATENT SPECIFICATION

(11) **EP 2 815 166 B1**
(45) Date of publication and mention of the grant of the patent: **14.10.2015**
(21) Application number: 12839161.2
(22) Date of filing: 31.10.2012
(51) Int. Cl.: F17D 5/00, F16L 55/46, G01M 3/24, H02H 5/08

(54) **METHOD FOR PROTECTING IN-LINE INSPECTION TOOL FROM EXPLOSION AND CORRESPONDING EXPLOSION PROTECTION SYSTEM DEVICE**
VERFAHREN ZUM SCHUTZ EINES IN-LINE-INSPEKTIONSWERKZEUGS VOR EXPLOSIONEN UND ENTSPRECHENDE EXPLOSIONSSCHUTZSYSTEMVORRICHTUNG
PROCÉDÉ POUR PROTÉGER DE L'EXPLOSION UN OUTIL D'INSPECTION EN LIGNE ET DISPOSITIF DE SYSTÈME DE PROTECTION ANTI-EXPLOSION CORRESPONDANT

(30) Priority: 15.02.2012 RU 2012105377
(43) Date of publication of application: 24.12.2014
(73) Proprietor: Publichnoye Aktsionernoe Obschestvo "Gazprom", Moscow 117997 (RU)
(72) Inventor: NATAROV, Boris Nikolaevich, Moscow, 111524 (RU); ENDEL, Iosif Abramovich, Moscow, 107014 (RU); GORBUNOVA, Svetlana Vladimirovna, Moscow, 107014 (RU); KOMAROV, Aleksandr Fedorovich, Moskovskaya oblast, 144012 (RU); ILYENKO, Konstantin Viktorovich, Reutov, Moskovskaya obl., 143966 (RU); ZAIGRAEV, Viktor Vladimirovich, Severodvinsk, Arkhangelskaya oblast, 164523 (RU); BUTUSOV, Igor Izrailevich, Moscow 115142 (RU); PRELOVSKY, Nikolai Nikolaevich, Lyubertsy, Moskovskaya obl., 140004 (RU); SHCHEGORSKAYA, Margarita Albertovna, Reutov, Moskovskaya obl., 143965 (RU); STEPANOV, Igor Vladimirovich, Moscow, 117335 (RU)
(74) Representative: Hermann, Felix
(86) International application number: PCT/RU2012/000892
(87) International publication number: WO 2013/122506

(56) References cited:
- WO-A1-2007/049993
- US-A- 3 732 434
- US-A- 3 768 304

## Description

The invention relates to methods for nondestructive testing of trunk gas pipelines quality, in particular, to the provision of a flaw detector - pig explosion protection during the in-tube flaw detection of a gas pipeline.

RU 2301940 also known as WO 2007/049993 is the closest to the claimed solution in the number of common features.

A known protection method implies that the flaw detector power supply is interrupted when the ambient pressure is negative with respect to the atmospheric pressure.

A known device of the in-tube flaw detector protection system comprises at least one section of the in-tube flaw detector provided with a source for supplying power to instruments and devices thereof, a power supply switch and a pressure control device connected to a pressure sensor which is located in such a way that it is enabled to measure pressure in the medium surrounding the said section, at that, the pressure control device is connected to the power supply switch in such a way that it is enabled to control the said switch for interrupting the power supply when the pressure of the section surrounding medium is negative with respect to the atmospheric pressure. Besides, the device comprises another sensor identifying the flaw detector no-motion in a pipe, at that, the output of the flaw detector no-motion sensor and the output of the said pressure control device are connected to AND circuit in such a way that it is enabled to control the switch for interrupting the power supply. An odometer could be applied as a no-motion sensor.

The drawback of the said method for protecting against explosion and of the protection system device is that during the displacement of air by gas, the excessive pressure of the gas-air mixture in a launching trap with respect to the atmospheric pressure, when power to flaw detector instruments is supplied, could not ensure the mixture explosion safety. When filling a launching trap with gas, residual air in the trap is inadmissible. Besides, unauthorized power supply to the flaw detector instruments seems possible in the presence of an explosible gas-air mixture in the launching trap immediately after the started displacement of air by gas, which is going naturally under gas pressure exceeding the atmospheric pressure.

Low-frequency electromagnetic transmitters and receivers used for identifying in-tube flaw detectors - pigs moving inside pipelines are known. For example, Aprodit Company produces low-frequency transmitters PNT and receivers NPR in series.

Transmitter PNT generates a magnetic field pulsating with the low frequency of 22 Hz. This signal passes through metal pipeline walls, soil or water above a pipeline, as well as through a reinforced concrete floor. The transmitter is set on a body of an in-tube flaw detector - pig.

Serial transmitter PNT is equipped with an autonomous power supply, emits a continuous or intermittent signal.

Receiver NPR is a portable autonomous device, which is used for searching and determining a location of an in-tube flaw detector - pig equipped with transmitter PNT emitting electromagnetic waves with the frequency of 22 Hz.

RU 2110729 shows a device which comprises the transmitter set on the pig, and receiver with an antenna for receiving the transmitter's signals located above the pipeline. The transmitter emits signals within the range of frequencies from 7 to 11 Hz with the duty ratio, which is set depending on the pig velocity. The transmitter comprises a hermetically sealed container encasing the autonomous power supply, which is connected via the electronic switch controlled by a supply voltage monitoring unit with the modulator, the output of the modulator is connected to the generator, the output of the generator is connected to the emitting antenna. The transmitter's signal receiver comprises the decoder, the input of the decoder is connected to the output of the amplifier-converter, and the output of the decoder - with a monitoring and indication device.

The drawback of known devices identifying the location of a flaw detector - pig in the pipeline is that they could not be additionally used for transmitting signals on the execution of normal operation modes of the flaw detector - pig kicked to the launching trap, and also during the flaw detector - pig movement through the pipeline in the course of the in-tube inspection and on reaching the receiving trap. For example, the operation mode of the transmitter PNT (continuous or intermittent) is definitely set using the remote control before the kicking of the flaw detector - pig to the launching trap prior to the in-tube pipeline inspection. Thus, the emission from the transmitter PNT could not be modulated in time to form signals on the execution of normal operation modes of the flaw detector - pig after its kicking to the launching trap.

US 3,732,434 provides a pipeline pig for transporting electrical circuitry through a pipeline. The pipeline pig includes a pressure-sensitive switch on the housing which is designed to electrically activate the electrical circuitry when the internal pipeline pressure exceeds a predetermined level. When the pressure does not exceed that level, the electrical circuitry remains inactive.

US 3,768,304 shows a pipeline leak locator plug having a signal transmitter connected to a switch and having sealing cups and discs for sealingly engaging the interior of the pipeline, operates by a change in fluidic pressure caused by a leak in the pipeline, whereby a signal as to whether the leak is upstream or downstream is actuated by the pressure differential acting on the sealing cups through the switch to the transmitter.

The invention object is to increase the explosion protection efficiency of an in-line inspection tool during its location in explosible areas of a gas pipeline by means of obtaining and application of additional information concerning the power supply of the instrument compartment and the execution of normal operation modes of the tool using the receipt and analysis of signals from a low-frequency electromagnetic transmitter controlled by the tool onboard computer.

The claimed method for protecting against the explosion of an in-line inspection tool implies that the tool is brought to the launching trap of a trunk gas pipeline with the tool's instrument compartment supply circuits disconnected from a power supply unit, while air is displaced by natural gas in the launching trap, the increase of gas-air mixture excessive pressure with respect to the atmospheric pressure is monitored, the instrument compartment power supply circuits are connected to the power supply unit, the linear section of a trunk gas pipeline is inspected, the tool is brought to the receiving trap, while natural gas is displaced by air in the launching trap, the natural gas pressure decrease is monitored, the instrument compartment supply circuits are disconnected from the power supply unit, the tool is withdrawn from the receiving trap.

In contrast to the known method, the claimed method implies the connection of the instrument compartment supply circuits to the power supply unit at the pressure guaranteeing the absence of explosible gas mixture, for example, 3 atm in the launching trap, and the instrument compartment supply circuits are disconnected when the pressure is decreased to, for example, 3 atm in the receiving trap, with an additional monitoring of the instrument compartment power supply and the execution of normal operation modes of the in-line inspection tool according to signals from low-frequency electromagnetic transmitter.

The main technical outcome, which is achieved following the implementation of the claimed method for protecting an in-line inspection tool from the explosion, consists in the increased degree of the explosion protection of the in-line inspection tool and a gas pipeline, and in the additional information providing for the prevention of undesirable explosible situation progress. The process of the in-line inspection tool kicking to the launching trap and the displacement of air by gas is held in conditions of explosible gas-air mixture generation. The explosible gas-air mixture contents in the launching trap to the point of almost complete replacement of air with gas. Gas to displace air is fed under the pressure of at most 0.2 MPa (2 kilogauss/cm²).

Air displacement is considered to be complete when the oxygen content in gas leaving the launching trap amounts at most 2% and determined by a gas analyzer (item 3.21 CΠ 111-34-96 "Code of the regulations on construction of trunk gas pipelines. Void pigging and testing of gas pipelines").

Consequently, for increasing the efficiency of the tool explosion protection, the instrument compartment power supply circuits should be connected to the power supply unit in the presence of not just excessive but higher excessive pressure in the launching trap, for example, 3 atm, guaranteeing the absence of explosible gas-air mixture in the trap.

The in-line inspection tool kicking is followed by the displacement of air by gas in the launching trap. At that, the valve opens to vent the gas-air mixture. Oxygen content in the gas-air mixture leaving the trap is monitored by a gas analyzer. When oxygen content in the gas-air mixture leaving the launching trap falls below 2%, the vent valve is shut off and gas pressure starts to increase in the launching trap. When the gas pressure in the launching trap equals 3 atm, the onboard computer according to a signal from the pressure alarm connects the instrument compartment power supply circuits to the power supply unit. Simultaneously, the onboard computer starts to receive the signal from the no-motion sensor. Consequently, it may surely be considered that while the connection of the tool's instrument compartment power supply circuits to the power supply unit, the explosible situation is fully absent in the launching trap, because the trap is completely filled with gas, and the tool is motionless.

Then gas pressure achieves the nominal value of 8 - 10 atm in the launching trap and normal operation of the gas pipeline inspection tool starts. The process of the in-line inspection tool withdrawal from the receiving trap and the displacement of gas by air is also conducted in conditions of an explosible mixture formation. The valve opens to vent gas. When gas pressure drops to 3 atm in the receiving trap, the onboard computer according to a signal from the pressure alarm disconnects the instrument compartment power supply circuits from the power supply unit. Consequently, it may surely be considered, that the disconnection of the instrument compartment takes place prior to the formation of the explosible gas-air mixture in the receiving trap.

The claimed method for protecting against the explosion of an in-line inspection tool allows for additional information on the operative condition of the tool kicked to the launching trap, stuck in the gas pipeline or reached the receiving trap before the tool withdrawal, by receiving a signals group from the low-frequency transmitter, modulated in time by the onboard computer. The modulation of a transmitter signal in time is done by the onboard computer by switching of power supply circuits in time.

The claimed device for protecting against the explosion of in-line inspection tool contents a hermetical instrument compartment with set inside electronic equipment, power supply unit, onboard computer, low-frequency electromagnetic transmitter, no-motion sensor, and an environmental pressure alarm. At that, the onboard computer executes the inclusion of the instrument compartment power supply circuits under the indications of environmental pressure alarm subject to the excessive pressure in the medium surrounding tool for the value guaranteeing the absence of explosible gas-air mixture in the launching trap. Low-frequency electromagnetic transmitter is connected to the tool power supply unit through the commutating switch controlled by the onboard computer.

After the in-line inspection tool kicking to the launching trap, the onboard computer executing the given algorithm of a tool functioning, switches on the low-frequency transmitter power supply for time periods of different length. The emission from the low-frequency transmitter in the interval of determined length corresponds to the execution of the determined normal operation mode by the tool. For example: the instrument compartment power-up, onboard systems monitoring, readiness for normal operation, motion start, inlet valve run, supplying power to the diagnostics system, cruise condition and, afterwards, at the approaching to the receiving trap: the valve is run, arrived, power supply monitoring, pressure monitoring, and the instrument compartment power cut (termination of transmitter's emission). Besides, at the cruise condition while the trunk gas pipeline inspection the following signals could be produced; failure, emergency stop, disconnection of power supply from the diagnostics system, and the instrument compartment power cut (termination of transmitter's emission). All low-frequency signals are received and identified by the receiver with releasing of corresponding information to an operator display. Consequently, the operator receiving the credible information on the presence or absence of the instrument compartment power supply, can prevent the development of explosible situation giving timely orders on opening and closing of the inlet valve and launching (receiving) trap.

According to the requirements of pipelines flaw detection technology it is inadmissible to start the in-line inspection tool motion when the launching trap is filled with gas. Therefore the signal from the tool no-motion sensor is connected to the input of the onboard computer, which is an accelerometer. For increasing the reliability of a signal acquirement on the pressure value of the gas-air mixture in the launching (receiving) trap, three pressure relays with a pickup setting for the pressure of 3 atm are used as a pressure alarm, and signals are processed by the onboard computer using two out of three voting logic.

To increase the tool explosion safety the instrument compartment is filled with inactive gas and hermetically sealed.

The invention is illustrated by the drawing.

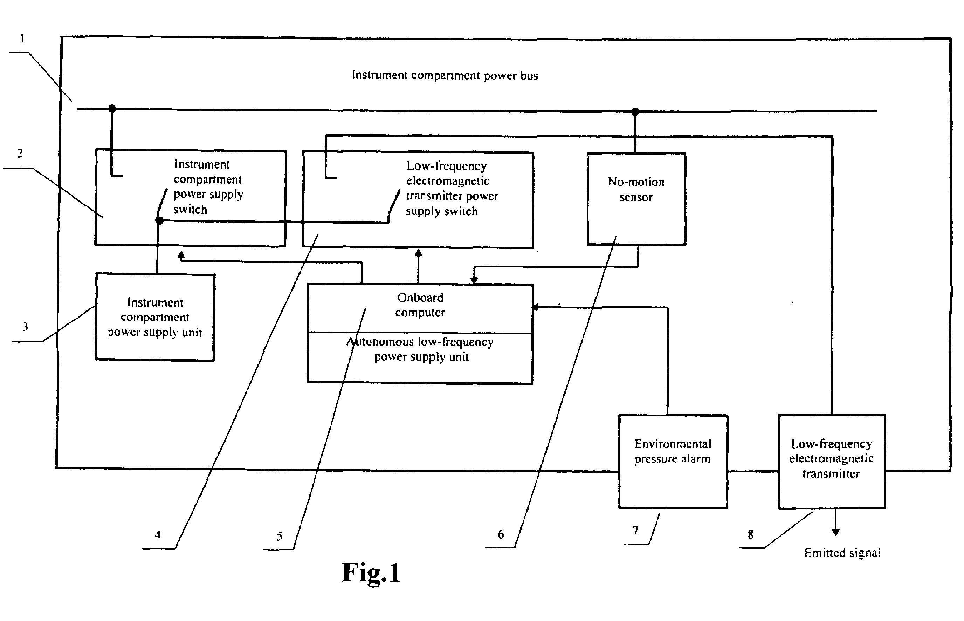

Fig. 1 shows the system device scheme for protecting the in-line inspection tool from the explosion.

The method for protecting the in-line inspection tool from the explosion is considered by the example of the device presented in Fig. 1.

The system device scheme for protecting the in-line inspection tool from the explosion applies special functional capabilities of the following devices that constitute the tool and located in the instrument compartment 1; power supply unit 3, onboard computer 5, no-motion sensor 6, environmental pressure alarm 7 and low-frequency electromagnetic transmitter 8. Moreover, the power bus of the instrument compartment 1 is connected to the power supply unit 3 through the commutating switch 2 controlled by the onboard computer 5. Using other commutating switch 4, which supplies power to the low-frequency electromagnetic transmitter 8, the onboard computer 5 can modulate a signal emitted from the transmitter 8 in time. Onboard computer 5 is supplied with a low-voltage autonomous power supply unit.

The device operates in the following way. In the receiving trap after the tool kicking with the pressure increase guaranteeing the absence of explosible gas mixture in the launching trap, for example, 3 atm, the pressure alarm 7 activates and the onboard computer 5 generates a command to the power supply switch of the instrument compartment 2 for the connection of the power bus of the instrument compartment to the power supply unit. At the same time, according to the command of onboard computer 5 the low-frequency electromagnetic transmitter 8 is powered through the commutating switch 4 for the set in advance time corresponding, for example, to the signal - power is supplied to the instrument compartment. Next, a signal may follow - the tool is motionless etc. While the tool withdrawal in the receiving trap with the pressure drop to 3 atm the pressure alarm 7 activates, and the onboard computer 5 generates a command to the commutating switch 2 for the interruption of the instrument compartment 1 power supply.

At that moment the power supply to transmitter 8 is switched off, it stops the signal emission, and it means that it is possible to reduce pressure to atmospheric in the receiving trap and open it for the tool withdrawal.

In case of the unauthorized tool stop inside the linear part of a gas pipeline the signal - failure may follow with a subsequent disconnection of the instrument compartment power bus.

## Claims

1. Method for the explosion protection of an in-line inspection tool consisting in the tool insertion in the launching trap of a trunk gas pipeline with power supply circuits of the tool's instrument compartment (1) disconnected from the power supply unit (3), in the process of air displacement by natural gas in the launching trap, the excessive pressure of the gas-air mixture with respect to the atmospheric pressure being monitored, the instrument compartment power supply circuits being connected to the power supply unit (3), the linear part of a trunk gas pipeline being inspected, the tool being inserted to the receiving trap, while the natural gas displacement by air the natural gas pressure drop is monitored in the receiving trap, the instrument compartment power supply circuits being disconnected from the power supply unit, the tool being withdrawn from the receiving trap,
**characterized in that**
the instrument compartment power supply circuits are connected to the power supply unit (3) at the pressure guaranteeing the absence of an explosible gas mixture in the launching trap, for example, 3 atm, and the instrument compartment power supply circuits are disconnected from the power supply unit (3) at the pressure drop in the receiving trap to, for example, 3 atm, and also the instrument compartment power supply and the execution of normal operation modes of the in-line inspection tool according to signals from the low- frequency electromagnetic transmitter are additionally monitored.

2. A system device for protecting the in-line inspection tool from the explosion containing the hermetically sealed instrument compartment (1) with encased electronic equipment, power supply unit (3), onboard computer (5), low-frequency electromagnetic transmitter (8), tool no-motion sensor (6) and environmental pressure alarm (7),
**characterized in that**
the onboard computer (5) switches on power supply circuits of the instrument compartment (1) according to the readings of environmental pressure sensor in the presence of the pressure in the medium surrounding the tool exceeding the atmospheric pressure by the value guaranteeing the absence of explosible mixture in the launching trap, and the low-frequency electromagnetic transmitter (8) is connected to the tool power supply unit (3) through the commutating switch (4) controlled by the onboard computer (5).

3. The device according to claim 2 **characterized in that** an accelerometer is used as a no-motion sensor.

4. The device according to claim 2 **characterized in that** three pressure relays, those signals are processed by the onboard computer using two out of three voting logic.

5. The device according to claim 2 **characterized in that** the hermetically sealed instrument compartment is filled with inactive gas.

## Patentansprüche

1. Verfahren für den Explosionsschutz eines Inline-Inspektionswerkzeugs bestehend aus dem Werkzeugeinführen in die Zuführschleuse einer Gasfernleitung, wobei Stromversorgungsschaltungen des Instrumentenfachs (1) des Werkzeugs von der Stromversorgungseinheit (3) getrennt sind, im Prozess der Luftverdrängung durch Erdgas in der Zuführschleuse, der Überdruck des Gas-Luft-Gemischs bezüglich des atmosphärischen Drucks überwacht wird, wobei die Instrumentenfach-Stromversorgungsschaltungen mit der Stromversorgungseinheit (3) verbunden sind, wobei der gerade Teil einer Gasfernleitung inspiziert wird, wobei das Werkzeug in die Entnahmeschleuse eingeführt wird, wobei während der Erdgasverdrängung durch Luft der Abfall des Erdgasdrucks in der Entnahmeschleuse überwacht wird, wobei die Instrumentenfach-Stromversorgungsschaltungen von der Stromversorgungseinheit getrennt sind, wobei das Werkzeug aus der Entnahmeschleuse herausgezogen wird,
**dadurch gekennzeichnet, dass**
die Instrumentenfach-Stromversorgungsschaltungen mit der Stromversorgungseinheit (3) bei dem Druck verbunden werden, der die Abwesenheit eines explosiven Gasgemischs in der Zuführschleuse garantiert, beispielsweise 3 atm, und die Instrumentenfach-Stromversorgungsschaltungen von der Stromversorgungseinheit (3) bei dem Druckabfall in der Entnahmeschleuse auf beispielsweise 3 atm getrennt werden und auch die Instrumentenfach-Stromversorgung und die Ausführung normaler Betriebsmodi des Inline-Inspektionswerkzeugs gemäß Signalen von dem elektromagnetischen Niederfrequenzsender zusätzlich überwacht werden.

2. Systemeinrichtung zum Schützen des Inline-Inspektionswerkzeugs vor der Explosion, enthaltend das hermetisch abgedichtete Instrumentenfach (1) mit eingeschlossener elektronischer Ausrüstung, Stromversorgungseinheit (3), Bordcomputer (5), elektromagnetischem Niederfrequenzsender (8), Werkzeug-Nicht-Bewegungs-Sensor (6) und Umweltdruckalarm (7),
**dadurch gekennzeichnet, dass**
der Bordcomputer (5) Stromversorgungsschaltungen des Instrumentenfachs (1) gemäß Messwerten eines Umweltdrucksensors einschaltet, wenn der Druck in dem Medium um das Werkzeug herum den atmosphärischen Druck um den Wert übersteigt, der die Abwesenheit eines explosiven Gemischs, in der Zuführschleuse garantiert, und der elektromagnetische Niederfrequenzsender (8) durch den durch den Bordcomputer (5) gesteuerten kommutierenden Schalter (4) mit der Werkzeugstromversorgungseinheit (3) verbunden wird.

3. Einrichtung nach Anspruch 2, **dadurch gekennzeichnet, dass** ein Beschleunigungsmesser als ein Nicht-Bewegungs-Sensor verwendet wird.

4. Einrichtung nach Anspruch 2, **gekennzeichnet durch** drei Druckrelais, deren Signale durch den Bordcomputer unter Verwendung einer Zwei-aus-Drei-Auswahllogik verarbeitet werden.

5. Einrichtung nach Anspruch 2, **dadurch gekennzeichnet, dass** das hermetisch abgedichtete Instrumentenfach mit inaktivem Gas gefüllt ist.

## Revendications

1. Procédé pour la protection contre une explosion d'un outil d'inspection en ligne consistant en l'insertion de l'outil dans la gare de lancement d'une conduite principale de gaz avec les circuits d'alimentation du compartiment d'instrument (1) de l'outil déconnectés de l'unité d'alimentation (3) au cours du processus de déplacement d'air par du gaz naturel dans la gare de lancement, la pression excessive du mélange gaz-air par rapport à la pression atmosphérique étant surveillée, les circuits d'alimentation du compartiment d'instrument étant connectés à l'unité d'alimentation (3), la partie linéaire d'une conduite principale de gaz étant inspectée, l'outil étant inséré vers la gare de réception, pendant le déplacement du gaz naturel par l'air, la chute de pression du gaz naturel est surveillée dans la gare de réception, les circuits d'alimentation du compartiment d'instrument étant déconnectés de l'unité d'alimentation, l'outil étant retiré de la gare de réception,
**caractérisé en ce que**
les circuits d'alimentation du compartiment d'instrument sont connectés à l'unité d'alimentation (3) à la pression garantissant l'absence d'un mélange de gaz explosif dans la gare de lancement, par exemple, 3 atm, et les circuits d'alimentation du compartiment d'instrument sont déconnectés de l'unité d'alimentation (3) à la chute de pression dans la gare de réception à, par exemple, 3 atm, et également l'alimentation du compartiment d'instrument et l'exécution de modes de fonctionnement normaux de l'outil d'inspection en ligne conformément à des signaux provenant de l'émetteur électromagnétique basse fréquence sont en plus surveillés.

2. Dispositif de système pour protéger l'outil d'inspection en ligne de l'explosion contenant le compartiment d'instrument (1) fermé hermétiquement avec l'équipement électronique, l'unité d'alimentation (3), l'ordinateur embarqué (5), l'émetteur électromagnétique basse fréquence (8), le capteur d'absence de mouvement d'outil (6) et l'alarme de pression d'environnement (7) enfermés,
**caractérisé en ce que**
l'ordinateur embarqué (5) active les circuits d'alimentation du compartiment d'instrument (1) conformément aux lectures d'un capteur de pression d'environnement lorsque la pression dans le milieu entourant l'outil dépasse la pression atmosphérique de la valeur garantissant l'absence de mélange explosif dans la gare de lancement, et l'émetteur électromagnétique basse fréquence (8) est connecté à l'unité d'alimentation d'outil (3) par l'intermédiaire du commutateur de commutation (4) commandé par l'ordinateur embarqué (5).

3. Dispositif selon la revendication 2, **caractérisé en ce qu'**un accéléromètre est utilisé en tant que capteur d'absence de mouvement.

4. Dispositif selon la revendication 2, **caractérisé par** trois relais de pression, dont les signaux sont traités par l'ordinateur embarqué en utilisant deux logiques de vote parmi trois logiques.

5. Dispositif selon la revendication 2, **caractérisé en ce que** le compartiment d'instrument fermé hermétiquement est rempli d'un gaz inactif.
